# FASCICULE DE BREVET EUROPEEN

(11) **EP 3 022 009 B1**
(45) Date de publication et mention de la délivrance du brevet: **18.10.2017**
(21) Numéro de dépôt: 14747102.3
(22) Date de dépôt: 15.07.2014
(51) Int. Cl.: B05B 15/00, B23K 101/00, B23K 26/144, B23K 26/342, B23K 101/34, B23K 26/12, B23K 26/14, B23K 26/34

(54) **CLOCHE DE PROTECTION POUR UNE BUSE DE PROJECTION LORS D'UN PROCEDE DE RECHARGEMENT**
SCHUTZGLOCKE FÜR EINE SPRÜHDÜSE IN EINEM AUFTRAGSSCHWEISSENSVERFAHREN
GUARD CONE FOR A SPRAY NOZZLE DURING A BUILD-UP METHOD

(30) Priorité: 17.07.2013 FR 1357037
(43) Date de publication de la demande: 25.05.2016
(73) Titulaire: Snecma, 75015 Paris (FR)
(72) Inventeur: MOTTIN, Jean-Baptiste, F-77550 Moissy Cramayel Cedex (FR)
(74) Mandataire: Cabinet Camus Lebkiri
(86) Numéro de dépôt international: PCT/FR2014/051813
(87) Numéro de publication internationale: WO 2015/007988

(56) Documents cités:
- US-A1- 2007 175 874
- US-B1- 6 593 540

## Description

### DOMAINE TECHNIQUE

La présente invention concerne une cloche de protection permettant de protéger la partie d'une pièce métallique qui est en cours de rechargement de manière à éviter son oxydation. L'invention concerne également un dispositif de rechargement comportant une telle cloche de protection.

### ETAT DE LA TECHNIQUE ANTERIEUR

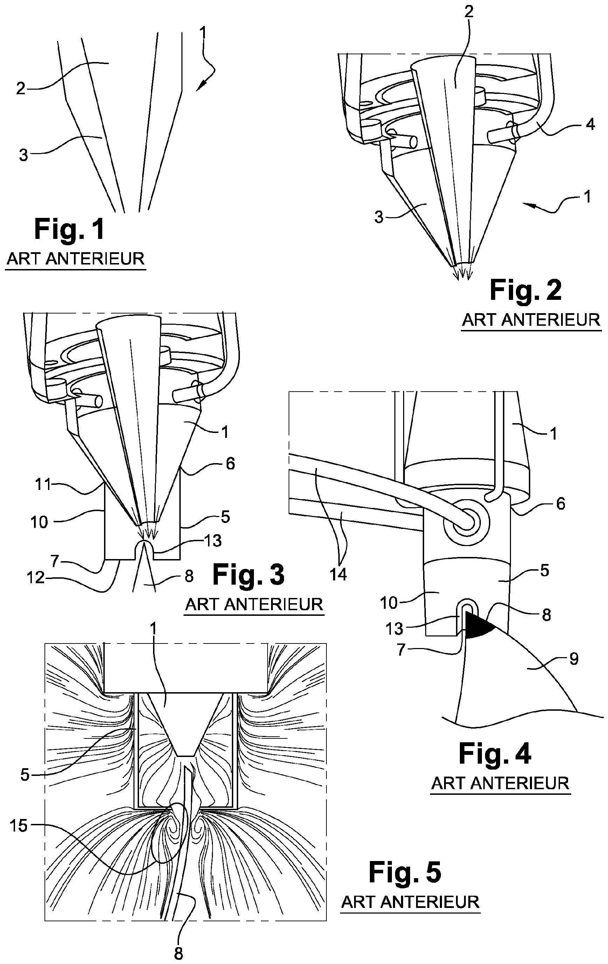

Dans le domaine de l'aéronautique, il est courant d'utiliser des procédés de rechargement pour réparer des pièces métalliques et notamment pour réparer des pales de disques aubagés monoblocs, des pales de compresseurs ou de distributeur. Ces procédés de rechargement utilisent généralement une poudre métallique qui est projetée sur la zone à réparer et qui est fusionnée par un faisceau laser. La partie endommagée de la pièce métallique peut ainsi être reconstituée. De tels procédés de rechargement sont mis en oeuvre grâce à des buses de projection semblables à celle représentée sur la figure 1. Une telle buse de projection 1 comporte :
- un conduit central 2 au travers duquel est projeté le faisceau laser,
- un conduit périphérique 3 qui entoure le conduit central et au travers duquel est projetée la poudre métallique.

Toutefois, les pièces à reconstruire sont généralement en titane, en nickel, en aluminium ou encore en cobalt, et par conséquent elles présentent un risque d'oxydation lors du procédé de rechargement. Pour remédier à ce problème, l'art antérieur a proposé une buse d'injection semblable à celle de la figure 2. Cette buse d'injection 1 comporte un système d'injection d'un gaz neutre, comme de l'argon à travers le conduit central 2 de façon à éviter les remontées de gaz dans le conduit central. En outre, la buse de la figure 2 comporte des canaux d'injection 4 d'un gaz inerte dans le canal périphérique. Ces canaux d'injection 4 permettent d'injecter un gaz inerte, comme de l'argon et de l'hélium, dans le conduit périphérique de façon à porter la poudre métallique. Un tel dispositif est par exemple décrit dans le document US 6 326 585. Un dispositif avec les caractéristiques du préambule de la revendication 1 est décrit dans le document US-A-6 326 585.

Toutefois, cette protection locale par des gaz inertes provenant de la buse de projection n'est pas suffisante pour empêcher l'oxydation de la pièce durant son rechargement.
Pour remédier à ce problème, l'art antérieur a proposé d'ajouter une cloche de protection entre la pièce métallique à réparer et la buse de projection. Une buse de projection pourvue d'une telle cloche de protection 10 est représentée sur les figures 3 et 4. Elle comporte généralement une paroi latérale cylindrique 5 qui comporte une extrémité supérieure 6 apte à venir au contact de la buse de protection 1 et une extrémité inférieure 7 apte à venir au contact de la partie 8 de la pièce métallique 9 à réparer. L'extrémité supérieure 6 de la cloche de protection 10 est pourvue d'une première paroi transversale percée par une ouverture cylindrique 11 dans lequel une partie de la buse de projection 1 peut s'insérer. L'extrémité inférieure 7 de la cloche de protection est pourvue d'une deuxième paroi transversale 12 percée par une encoche 13 en forme de U inversé dans lequel la partie 8 de la pièce métallique 9 à recharger peut venir s'insérer. Entre ces deux extrémités, la paroi latérale 5 de la cloche de protection délimite une enceinte étanche dans laquelle on injecte un gaz inerte de façon à empêcher l'oxydation de la pièce métallique pendant son rechargement. Pour cela, la cloche de protection comporte au moins un conduit d'amenée 14 d'un gaz inerte dans l'enceinte. Ce conduit 14 débouche dans un orifice réalisé dans la paroi latérale de la cloche de protection. Une telle cloche de protection permet d'avoir une zone inerte tout autour de la pièce métallique, et elle permet donc de limiter l'oxydation de la pièce métallique durant le rechargement. Toutefois, la demanderesse a remarqué que malgré une telle cloche de protection, une oxydation de la pièce métallique avait lieu lors de son rechargement.

### EXPOSE DE L'INVENTION

L'invention vise à remédier aux inconvénients de l'état de la technique en proposant une cloche de protection pour buse de projection qui protège mieux la pièce métallique de l'oxydation pendant un procédé de rechargement.

En effet, la demanderesse a remarqué que l'oxydation des pièces métalliques lors des procédés de rechargement de l'art antérieur, malgré la présence de cloches de protection, était due à des turbulences de l'écoulement gazeux qui ont lieu à la jonction entre la cloche de protection et la pièce métallique à recharger. Du fait de ces turbulences, de l'oxygène est aspiré entre la cloche de protection et la pièce métallique en rechargement. Un tel phénomène est représenté sur la figure 5. Cet oxygène peut ainsi pénétrer dans l'enceinte du fait de ces perturbations 15 de l'écoulement gazeux, ce qui entraine une oxydation de la pièce métallique.

L'invention vise à remédier aux inconvénients des cloches de protection de l'art antérieur en supprimant les turbulences de l'écoulement gazeux à la jonction entre la pièce métallique et la cloche de protection.

Pour cela, l'invention propose d'avoir une cloche de protection dont la surface intérieure, entre l'orifice latéral d'arrivée du gaz inerte et l'extrémité inférieure de la cloche de protection, n'est plus cylindrique mais tronconique. Ainsi, la surface intérieure de la cloche de protection est sensiblement parallèle à la surface extérieure de la buse de protection qui est insérée dans la cloche de protection, ce qui permet de diminuer les perturbations gazeuses à proximité de l'extrémité inférieure de la cloche de protection.

Plus précisément, un premier aspect de l'invention concerne une cloche de protection apte à être placée entre une buse de projection et une pièce métallique lors d'un procédé de rechargement de la pièce métallique, la cloche de protection comportant une paroi latérale s'étendant suivant un axe de référence, la paroi latérale comportant une surface intérieure et une surface extérieure, la paroi latérale présentant une extrémité inférieure et une extrémité supérieure, la paroi latérale étant percée par au moins un orifice latéral d'arrivée de gaz, l'extrémité inférieure de la paroi latérale étant percée par une encoche dans laquelle une partie de la pièce métallique peut être insérée, l'extrémité supérieure de la paroi latérale étant pourvue d'une ouverture dans laquelle une partie de la buse de projection peut être insérée ; la surface intérieure de la paroi latérale comportant au moins une partie tronconique.

En d'autres termes, la surface intérieure de la paroi latérale, comporte au moins une partie inclinée par rapport à l'axe de référence. Le fait d'avoir une surface intérieure au moins en partie tronconique permet de conduire les gaz inertes dans l'espace entre la surface extérieure de la buse et la surface intérieure de la cloche de protection sans turbulences, de façon à éviter les remontées d'air à l'extrémité inférieure de la cloche de protection. La cloche de protection, la buse de projection et au moins une partie de la pièce métallique forme ainsi une enceinte hermétique à l'air extérieur. Cette enceinte est plus hermétique à l'air extérieur que celles de l'art antérieur, de sorte qu'elle protège mieux les pièces métalliques lors de leur rechargement.

La cloche de protection selon l'invention peut également présenter une ou plusieurs des caractéristiques ci-après prises indépendamment ou selon toutes les combinaisons techniquement possibles.

Avantageusement, la partie de la surface intérieure qui est tronconique est la partie de la surface intérieure qui est située entre l'orifice latéral d'arrivée des gaz et l'extrémité inférieure de la paroi latérale. On diminue ainsi les perturbations à la jonction entre la pièce métallique et la cloche de protection.

Selon un mode de réalisation préférentiel, toute la surface intérieure de la paroi latérale est tronconique. On diminue ainsi au maximum les perturbations à la jonction entre la pièce métallique et la cloche de protection. En outre, ce mode de réalisation est plus simple à fabriquer.

Selon un mode de réalisation préférentiel, la surface intérieure de la paroi latérale est inclinée par rapport à l'axe de référence d'un angle compris entre 20 et 40°. En effet, un tel angle d'inclinaison permet à la surface intérieure de la paroi latérale d'être parallèle ou sensiblement parallèle à la surface extérieure de la plupart des buses de projection, ce qui permet de diminuer les perturbations de l'air à l'extrémité inférieure de la paroi latérale et donc les entrées d'air dans la cloche de protection par cette extrémité inférieure.

Selon différents modes de réalisation :
- la paroi latérale peut être réalisée d'un seul tenant ; ou
- la paroi latérale peut comporter une bague extérieure cylindrique et un insert inséré dans la bague extérieure, l'insert présentant une surface intérieure tronconique. Ce mode de réalisation permet de transformer des cloches de protection de l'art antérieur en cloches de protection selon l'invention en insérant l'insert dans ces cloches de protection de l'art antérieur.

Le gaz inerte est de préférence injecté sur la pièce métallique à recharger grâce à au moins l'orifice latéral qui s'étend de préférence suivant un axe perpendiculaire à l'axe de référence. L'orifice latéral permet de remplir de gaz inerte l'enceinte formée par la cloche de protection, la buse de projection et au moins une partie de la pièce métallique.

La cloche de protection comporte de préférence un rail en saillie radiale de l'extrémité inférieure de la paroi latérale, le rail étant percé par au moins un orifice additionnel d'arrivée de gaz. Cet orifice additionnel permet de renforcer la protection de la pièce métallique contre l'oxydation car il permet d'injecter un gaz inerte sur la pièce métallique, en plus du gaz inerte qui est dans l'enceinte. L'orifice additionnel s'étend de préférence suivant un axe sensiblement parallèle à l'axe de référence.

Avantageusement, la cloche de protection comporte en outre une grille brise-jet disposée devant chaque orifice additionnel. Cette grille brise-jet permet de ne pas avoir un jet vif de gaz inerte qui arrive sur la pièce métallique mais un jet diffus, ce qui permet d'avoir une meilleure protection contre l'oxydation.

La pièce métallique à recharger est de préférence une pale présentant un bord d'attaque. L'encoche de la cloche de protection présente de préférence une forme lui permettant d'épouser le bord d'attaque de la pale. Plus généralement, l'encoche présente de préférence une forme lui permettant d'épouser la forme de la partie de la pièce métallique à reconstruire.

L'encoche permet de minimiser le volume autour de la pièce à reconstruire. Dans la mesure du possible la distance entre les parois intérieures de l'encoche et la surface de la pièce est inférieure à 30mm.

Un deuxième aspect de l'invention concerne un dispositif de rechargement pour la mise en oeuvre d'un procédé de rechargement d'une pièce métallique de turbomachine, le dispositif de rechargement comportant :
- Une buse de projection ;
- Une cloche de protection selon le premier aspect de l'invention, une partie de la buse de projection étant insérée dans l'ouverture de la cloche de protection.

Le dispositif de rechargement selon le deuxième aspect de l'invention peut également présenter une ou plusieurs des caractéristiques ci-après prises indépendamment ou selon toutes les combinaisons techniquement possibles.

La buse de projection présente de préférence une surface extérieure parallèle ou sensiblement parallèle à la surface intérieure de la cloche de protection. Par « sensiblement parallèle », on entend parallèle à plus ou moins 10°.

La buse de projection comporte de préférence un conduit central apte à être traversé par un laser et un conduit périphérique apte à être traversé par une poudre métallique. Le conduit périphérique entoure de préférence le conduit central.

Selon un mode de réalisation préférentiel, le dispositif de rechargement comporte des moyens d'étanchéité disposés entre la buse de protection et la cloche de protection. Ces moyens d'étanchéité permettent de rendre l'enceinte formée par la cloche de protection, la buse et une partie de la pièce métallique totalement étanche à l'air extérieur.

Ces moyens d'étanchéité comportent de préférence :
- Une première virole solidaire de la buse de projection ;
- Une pièce intermédiaire solidaire de la cloche de protection ;
- Un joint torique reliant la première virole et la pièce intermédiaire.

De tels moyens d'étanchéité permettent d'éviter l'entrée d'air dans l'enceinte, tout en autorisant les mouvements de la buse de projection par rapport à la pièce métallique. En effet, lors d'un procédé de rechargement, le faisceau laser doit être coaxial au débit de poudre. En d'autres termes, le point de focalisation du faisceau laser doit être au même endroit que le point d'arrivée du débit de poudre. Pour cela, la buse de projection doit pouvoir être déplacée dans un plan perpendiculaire au plan de référence de la cloche de projection. Le fait d'avoir des moyens d'étanchéité qui permettent les mouvements de la buse de projection par rapport à la cloche de protection permet de maintenir la cloche de protection contre la pièce métallique de façon à ce que la cloche de protection épouse la partie de la pièce métallique à protéger, tout en autorisant les mouvements de la buse de projection de façon à aligner le faisceau laser avec le point arrivée de la poudre métallique.

En outre, la pièce intermédiaire est de préférence percée par au moins une lumière agencée de façon à permettre la rotation autour de l'axe de référence de la cloche de protection par rapport à la buse de projection. La cloche de protection peut tourner par rapport à la buse de projection de façon à suivre la courbure de l'extrémité de la pièce métallique.

Un troisième aspect de l'invention concerne un système de rechargement comportant :
- un dispositif de rechargement selon le deuxième aspect de l'invention ;
- des moyens d'émission laser aptes à émettre un laser à travers un conduit central de la buse de projection, la cloche de protection étant fixée aux moyens d'émission laser par au moins une patte de fixation.

Le fait de fixer la cloche sur les moyens d'émission laser et non pas sur la buse de projection permet d'autoriser les mouvements de la cloche de protection par rapport à la buse de projection de façon optimiser la protection de la pièce métallique par la cloche tout en autorisant l'alignement du faisceau laser avec la buse de projection et plus précisément avec le point d'arrivée des poudres métalliques projetées par la buse de projection. En outre, le fait de ne pas fixer la cloche de protection directement sur la buse de projection permet de diminuer les risques de collision et d'endommagement de la buse.

La longueur de la patte de fixation est de préférence réglable de façon à pouvoir modifier la position de la cloche de protection par rapport à celle de la buse de projection.

Un quatrième aspect de l'invention concerne un système de rechargement comportant :
- une buse de projection ;
- une cloche de protection ;
- des moyens d'émission laser, la cloche de protection étant fixée sur les moyens d'émission laser.

Le système de rechargement selon le quatrième aspect de l'invention peut également comporter une ou plusieurs caractéristiques additionnelles décrites en référence aux autres aspects de l'invention.

Un cinquième aspect de l'invention concerne un dispositif de rechargement comportant :
- une buse de projection ;
- une cloche de protection ;
- des moyens d'étanchéité disposés entre la buse de projection et la cloche de protection, les moyens d'étanchéité autorisant les mouvements de la cloche de protection par rapport à la buse de projection.

Le dispositif de rechargement selon le cinquième aspect de l'invention peut également comporter une ou plusieurs caractéristiques additionnelles décrites en référence aux autres aspects de l'invention.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique en coupe d'une buse de projection de l'art antérieur ;
- La figure 2, une représentation schématique en coupe d'une autre buse de projection de l'art antérieur ;
- La figure 3, une représentation schématique en coupe d'une buse de projection de l'art antérieur pourvue d'une cloche de protection de l'art antérieur ;
- La figure 4, une représentation schématique en perspective de la buse et de la cloche de la figure 3 ;
- La figure 5, une représentation schématique en coupe des mouvements de gaz dans la cloche de la figure 3 ;
- La figure 6, une représentation schématique en coupe d'une cloche de protection selon un mode de réalisation de l'invention ;
- Les figures 7 et 8, des vues en perspective de la cloche de la figure 6 ;
- La figure 9, une représentation schématique en coupe d'un dispositif de rechargement selon un mode de réalisation de l'invention ;
- La figure 10, une représentation schématique en coupe d'un dispositif de rechargement selon un autre mode de réalisation de l'invention ;
- La figure 11, une représentation schématique en perspective d'un système de rechargement selon un mode de réalisation de l'invention ;
- La figure 12, un agrandissement de la partie E de la figure 11.

Pour plus de clarté, les éléments identiques ou similaires sont repérés par des signes de références identiques sur l'ensemble des figures.

### DESCRIPTION DETAILLEE D'AU MOINS UN MODE DE REALISATION

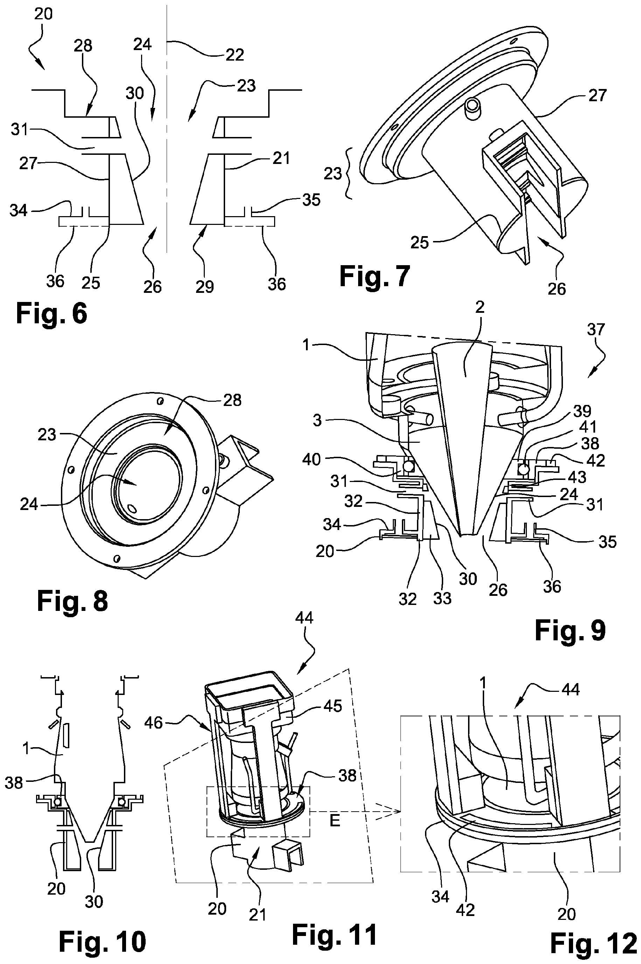

Une cloche de protection 20 adaptable sur une buse de projection pour la mise en oeuvre d'un procédé de rechargement d'une pièce métallique est représentée sur les figures 6 à 7. La cloche de protection 20 est destinée à venir entre la buse de projection et la partie de la pièce métallique à recharger pendant le procédé de rechargement de façon à former une enceinte étanche à l'air autour de la partie de la pièce métallique à reconstruire.

La cloche 20 comporte une paroi latérale 21 qui s'étend autour d'un axe de référence 22. La paroi latérale 21 présente une symétrie de révolution autour de l'axe de référence 22. La paroi latérale 21 présente une extrémité supérieure 23 pourvue d'une ouverture 24 dans laquelle une buse de projection peut être insérée. L'ouverture 23 est de préférence réalisée dans une première paroi transversale 28 solidaire de l'extrémité supérieure 23 de la paroi latérale. La paroi latérale 24 présente également une extrémité inférieure 25 pourvue d'une encoche 26 apte à épouser la forme de la partie de la pièce métallique à reconstruire. L'encoche 26 est de préférence réalisée dans une deuxième paroi transversale 29 solidaire de l'extrémité inférieure 25 de la paroi latérale.

La cloche de protection comporte également au moins un orifice latéral d'arrivée de gaz 31. Dans le cas présent, la cloche de protection comporte deux orifices d'arrivée de gaz 31. Ces deux orifices latéraux d'arrivée de gaz 31 sont dans ce mode de réalisation diamétralement opposés. Ce ou ces orifices latéraux d'arrivée de gaz sont réalisés à travers la paroi latérale 21. Ce ou ces orifices latéraux d'arrivée de gaz 31 permettent d'injecter un gaz inerte dans l'enceinte formée par la cloche de protection. Ce ou ces orifices latéraux d'arrivée de gaz 31 s'étendent de préférence perpendiculairement ou sensiblement perpendiculairement à l'axe de référence.

La paroi latérale 21 comporte une surface extérieure 27. La surface extérieure 27 est de préférence cylindrique.

La paroi latérale 21 comporte également une surface intérieure 30. La surface intérieure 30 est au moins en partie tronconique, c'est-à-dire qu'elle comporte au moins une partie inclinée par rapport à l'axe de référence. Plus précisément, la surface intérieure 30 est tronconique au moins entre le ou les orifices latéraux d'arrivée de gaz 31 et l'extrémité inférieure 25 de la paroi latérale. Selon un mode de réalisation préférentiel, la surface intérieure 30 est totalement tronconique. La surface intérieure 30 est de préférence inclinée par rapport à l'axe de référence, de façon à ce que, lorsqu'une buse d'injection est insérée dans l'ouverture 24, la surface extérieure de la buse de projection soit parallèle ou sensiblement parallèle à la surface intérieure de la paroi latérale, c'est-à-dire qu'elle est inclinée de plus ou moins 10° par rapport à la surface extérieure de la buse de projection. Pour cela, la surface intérieure de la paroi latérale est de préférence inclinée d'un angle compris entre 20 et 40° par rapport à l'axe de référence 22.

Selon différents modes de réalisation :
- la paroi latérale 21 peut être formée par une paroi d'un seul tenant qui comporte une surface extérieure cylindrique et une surface intérieure tronconique, comme représenté sur la figure 6, ou alors
- la paroi latérale 21 peut être formée par une bague extérieure 32 cylindrique et un insert 33 inséré dans la bague extérieure 32, l'insert présentant une surface intérieure tronconique, comme représenté sur les figures 9 et 10.

La cloche de protection 20 comporte également de préférence un rail 34 qui entoure l'extrémité inférieure 25 de la paroi latérale. Le rail 34 s'étend radialement autour de l'extrémité inférieure 25 de la paroi latérale. Le rail 34 est percé par au moins un orifice additionnel 35 d'injection d'un gaz inerte. Dans ce mode de réalisation, le rail 34 est percé par deux orifices additionnels 35 d'injection d'un gaz inerte sur la pièce métallique. Ces orifices additionnels 35 permettent d'injecter un gaz inerte sur la pièce métallique, dans la zone de la pièce métallique qui est à l'extérieur de la cloche de protection, mais à proximité de la cloche de protection, afin de renforcer la protection contre l'oxydation. Chaque orifice additionnel 35 s'étend de préférence parallèlement à l'axe de référence 22. La cloche de protection comporte de préférence une grille brise-jet 36 disposée devant chaque orifice additionnel de façon à ce que le jet de gaz sortant de cet orifice soit diffus et non pas vif. La protection contre l'oxydation de la pièce est ainsi améliorée.

La cloche de protection ainsi formée peut ainsi être placée de façon à former une enceinte hermétique à l'air autour de la pointe de la buse de projection qui est insérée dans l'ouverture 24 de la cloche de protection et de la partie de la pièce métallique qui est insérée dans l'encoche 26. Du gaz inerte est alors injecté dans cet enceinte hermétique grâce aux orifices d'arrivée 31 de gaz. L'air ne peut pas pénétrer dans cette enceinte grâce à la forme de la surface intérieure 30 de la paroi latérale. La pièce métallique peut donc être rechargée tout en étant protégée de l'oxydation. En outre, un gaz inerte est injecté autour de cette enceinte grâce aux orifices additionnels 35, ce qui permet encore de renforcer la protection de la pièce métallique contre l'oxydation.

La figure 9 représente un dispositif de rechargement 37 selon un mode de réalisation de l'invention. Ce dispositif de rechargement 37 comporte :
- une cloche de protection, qui peut par exemple être semblable à celle décrite en référence aux figures 7 à 8 et
- une buse de projection 1. Cette buse de projection 1 peut par exemple être semblable à celle décrite en référence à la figure 2.

La buse de projection 1 est insérée dans l'ouverture 23 de l'extrémité supérieure 25 de la cloche de protection 20. Comme représenté sur la figure 9, la surface extérieure 43 de la partie de la buse de projection 1 qui est insérée dans la cloche de protection 20 est sensiblement parallèle à la surface intérieure 30 de la paroi latérale 1 de la cloche de protection, ce qui permet de diminuer les turbulences de l'air à la jonction entre les bords de l'encoche 26 et une pièce métallique insérée dans cette encoche. Par sensiblement parallèle, on entend parallèle à +/- 10°.

Le dispositif de rechargement 37 comporte également des moyens d'étanchéité 38 disposés entre la buse de projection 1 et la cloche de protection 20. Ces moyens d'étanchéité 38 permettent d'assurer l'étanchéité entre la buse de projection 1 et la cloche de protection 20 tout en autorisant les mouvements entre ces deux pièces.

Pour cela, les moyens d'étanchéité 38 comportent :
- Une première virole 39 solidaire de la buse de projection 1 ;
- Une pièce intermédiaire 40 solidaire de la cloche de protection 20;
- Un joint torique 41 reliant la première virole 39 et la pièce intermédiaire 40. Le joint torique 41 autorise les mouvements entre la première virole 39 et la pièce intermédiaire 40 et donc entre la buse de projection 1 et la cloche de protection 20.

En outre, la pièce intermédiaire 40 est percée par au moins une lumière 42 agencée de façon à permettre la rotation autour de l'axe de référence de la cloche de protection par rapport à la buse de projection. La lumière présente de préférence une forme de banane.

La figure 10 présente un dispositif de rechargement 37' selon un autre mode de réalisation de l'invention. Ce dispositif de rechargement 37' comporte une buse de projection 1 semblable à celle du dispositif de rechargement 37 et une cloche de protection semblable à celle décrite en référence aux figures 6 à 8, à l'exception du fait que la surface intérieure 30 de la paroi latérale 21 n'est pas totalement tronconique, mais seule une portion de cette surface intérieure est tronconique.

Les figures 11 et 12 représentent un système de rechargement 44 selon un mode de réalisation de l'invention. Ce système de rechargement 44 comporte un dispositif de rechargement semblable à celui décrit en référence à la figure 9 et des moyens d'émission laser 45 apte à émettre un laser à travers le conduit central 2 de la buse de projection 1. La cloche de protection 20 est fixée aux moyens d'émission laser 45 par au moins une patte de fixation 46, dans le cas présent par quatre pattes de fixation 46. Du fait de cette fixation de la cloche de fixation aux moyens d'émission laser et de la présence des moyens d'étanchéité autorisant les mouvements entre la cloche de protection et la buse de projection, la buse de projection peut bouger par rapport à l'ensemble formé par la cloche de fixation 1 et les moyens d'émission laser 45, ce qui permet d'aligner le faisceau laser avec le point d'arrivée des poudres métalliques. L'encoche 42 permettant la rotation de la cloche de fixation par rapport à la buse de projection est mieux visible sur la figure 12.

Naturellement l'invention n'est pas limitée aux modes de réalisation décrits en référence aux figures et des variantes pourraient être envisagées sans sortir du cadre de l'invention.

## Revendications

1. Cloche de protection (20) apte à être placée entre une buse de projection (1) et une pièce métallique (9) lors d'un procédé de rechargement de la pièce métallique (9), la cloche de protection (20) comportant une paroi latérale (21) s'étendant suivant un axe de référence (22), la paroi latérale (21) comportant une surface intérieure (30) et une surface extérieure (27), la paroi latérale (21) présentant une extrémité inférieure (25) et une extrémité supérieure (23), la paroi latérale (21) étant percée par au moins un orifice latéral (31) d'arrivée de gaz, l'extrémité inférieure (25) de la paroi latérale (21) étant percée par une encoche (26) dans laquelle une partie (8) de la pièce métallique (9) peut être insérée, l'extrémité supérieure (23) de la paroi latérale (21) étant pourvue d'une ouverture (24) dans laquelle une partie de la buse de projection (1) peut être insérée ;
**caractérisée en ce que** la surface intérieure (30) de la paroi latérale (21) comporte au moins une partie tronconique.

2. Cloche de protection (20) selon la revendication précédente, dans laquelle la surface intérieure (30) de la paroi latérale (21) est inclinée par rapport à l'axe de référence (22) d'un angle compris entre 20 et 40°.

3. Cloche de protection (20) selon l'une des revendications précédentes, dans laquelle la paroi latérale (21) comporte une bague extérieure (32) cylindrique et un insert (33) inséré dans la bague extérieure (32), l'insert (33) présentant une surface intérieure tronconique.

4. Cloche de protection (20) selon l'une des revendications précédentes, comportant en outre un rail (34) en saillie radiale de l'extrémité inférieure (25) de la paroi latérale (21), le rail (34) étant percé par au moins un orifice additionnel (35) d'arrivée de gaz, l'orifice additionnel (35) s'étendant suivant un axe sensiblement parallèle à l'axe de référence,

5. Cloche de protection (20) selon la revendication précédente, comportant en outre une grille brise-jet (36) disposée devant chaque orifice additionnel (35).

6. Dispositif de rechargement (37, 37') pour la mise en oeuvre d'un procédé de rechargement d'une pièce métallique (8) de turbomachine, le dispositif de rechargement (37, 37') comportant :
- Une buse de projection (1);
- Une cloche de protection (20) selon l'une des revendications 1 à 5, une partie de la buse de projection (1) étant insérée dans l'ouverture (26) de la cloche de protection (20).

7. Dispositif de rechargement (37, 37') selon la revendication précédente, comportant outre des moyens d'étanchéité (38) disposés entre la buse de protection (1) et la cloche de protection (20).

8. Dispositif de rechargement (37, 37') selon la revendication précédente, dans lequel les moyens d'étanchéité (38) comportent:
- Une première virole (39) solidaire de la buse de projection ;
- Une pièce intermédiaire (40) solidaire de la cloche de protection ;
- Un joint torique (41) reliant la première virole (39) et la pièce intermédiaire (40).

9. Dispositif de rechargement (37, 37') selon la revendication précédente, dans lequel la pièce intermédiaire (40) est percée par au moins une lumière (42) agencée de façon à permettre la rotation autour de l'axe de référence (22) de la cloche de protection (20) par rapport à la buse de projection (1).

10. Système de rechargement (44) comportant :
- Un dispositif de rechargement (37, 37') selon l'une des revendications 6 à 9,
- des moyens d'émission laser (45) aptes à émettre un laser à travers un conduit central (2) de la buse de projection (1),
la cloche de protection (20) étant fixée aux moyens d'émission laser par au moins une patte de fixation (46).

## Patentansprüche

1. Schutzglocke (20), die bei einem Auftragungsverfahren des Metallteils (9) zwischen einer Spritzdüse (1) und einem Metallteil (9) platzierbar ist, wobei die Schutzglocke (20) eine Seitenwand (21) aufweist, die sich gemäß einer Referenzachse (22) erstreckt, wobei die Seitenwand (21) eine Innenfläche (30) und eine Außenfläche (27) aufweist, wobei die Seitenwand (21) ein unteres Ende (25) und ein oberes Ende (23) aufweist, wobei die Seitenwand (21) von mindestens einer seitlichen Gaseinlassöffnung (31) durchbrochen ist, wobei das untere Ende (25) der Seitenwand (21) von einer Kerbe (26) durchbrochen ist, in welche ein Teil (8) des Metallteils (9) einsetzbar ist, wobei das obere Ende (23) der Seitenwand (21) mit einer Öffnung (24) ausgestattet ist, in welche ein Teil der Spritzdüse (1) einsetzbar ist,
**dadurch gekennzeichnet, dass** die Innenfläche (30) der Seitenwand (21) mindestens einen kegelstumpfförmigen Teil aufweist.

2. Schutzglocke (20) nach vorangehendem Anspruch, wobei die Innenfläche (30) der Seitenwand (21) in Bezug zu der Referenzachse (22) in einem Winkel zwischen 20 und 40° inklusive geneigt ist.

3. Schutzglocke (20) nach einem der vorangehenden Ansprüche, wobei die Seitenwand (21) einen zylindrischen äußeren Ring (32) und einen in den äußeren Ring (32) eingesetzten Einsatz (33) aufweist, wobei der Einsatz (33) eine kegelstumpfförmige Innenfläche aufweist.

4. Schutzglocke (20) nach einem der vorangehenden Ansprüche, aufweisend ferner eine Schiene (34), die radial von dem unteren Ende (25) der Seitenwand (21) hervorsteht, wobei die Schiene (34) von mindestens einer zusätzlichen Gaseinlassöffnung (35) durchbrochen ist, wobei sich die zusätzliche Öffnung (35) gemäß einer zu der Referenzachse etwa parallelen Achse erstreckt.

5. Schutzglocke (20) nach vorangehendem Anspruch, aufweisend ferner ein Strahlregulierungsgitter (36), das vor jeder zusätzlichen Öffnung (35) angeordnet ist.

6. Auftragungsvorrichtung (37, 37') für die Durchführung eines Auftragungsverfahrens eines Metallteils (8) einer Turbomaschine, wobei die Auftragungsvorrichtung (37, 37') aufweist:
- eine Spritzdüse (1),
- eine Schutzglocke (20) nach einem der Ansprüche 1 bis 5, wobei ein Teil der Spritzdüse (1) in die Öffnung (26) der Schutzglocke (20) eingesetzt ist.

7. Auftragungsvorrichtung (37, 37') nach vorangehendem Anspruch, aufweisend ferner Dichtungsmittel (38), die zwischen der Schutzdüse (1) und der Schutzglocke (20) angeordnet sind.

8. Auftragungsvorrichtung (37, 37') nach vorangehendem Anspruch, wobei die Dichtungsmittel (38) aufweisen:
- eine erste, mit der Spritzdüse fest verbundene Hülle (39),
- ein mit der Schutzglocke fest verbundenes Übergangsteil (40),
- eine torische Dichtung (41), welche die erste Hülle (39) und das Übergangsteil (40) verbindet.

9. Auftragungsvorrichtung (37, 37') nach vorangehendem Anspruch, wobei das Übergangsteil (40) von mindestens einem Schlitz (42) durchbrochen ist, der derart ausgebildet ist, um die Rotation der Schutzglocke (20) um die Referenzachse (22) in Bezug zu der Spritzdüse (1) zu erlauben.

10. Auftragungssystem (44), aufweisend:
- eine Auftragungsvorrichtung (37, 37') nach einem der Ansprüche 6 bis 9,
- Lasersendemittel (45), die imstande sind, einen Laser durch eine zentrale Leitung (2) der Spritzdüse (1) zu senden,
wobei die Schutzglocke (20) an den Lasersendemitteln mittels mindestens einer Befestigungslasche (46) befestigt ist.

## Claims

1. A protective cover (20) able to be placed between a spray nozzle (1) and a metal piece (9) during a method for hardfacing the metal piece (9), the protective cover (20) including a side wall (21) extending along a reference axis (22), the side wall (21) including an inner surface (30) and an outer surface (27), the side wall (21) having a lower end (25) and an upper end (23), the side wall (21) being perforated by at least one gas inlet side aperture (31), the lower end (25) of the side wall (21) being perforated by a notch (26) in which part (8) of the metal piece (9) can be inserted, the upper end (23) of the side wall (21) being provided with an opening (24) in which part of the spray nozzle (1) can be inserted;
**characterised in that** the inner surface (30) of the side wall (21) includes at least one frustoconical part.

2. The protective cover (20) according to the previous claim, wherein the inner surface (30) of the side wall (21) is tilted relative to the reference axis (22) by an angle between 20 and 40°.

3. The protective cover (20) according to one of the previous claims, wherein the side wall (21) includes a cylindrical outer ring (32) and an insert (33) inserted in the outer ring (32), the insert (33) having a frustoconical inner surface.

4. The protective cover (20) according to one of the previous claims, further including a rail (34) radially protruding from the lower end (25) of the side wall (21), the rail (34) being perforated by at least one additional gas inlet aperture (35), the additional aperture (35) extending along an axis substantially parallel to the reference axis.

5. The protective cover (20) according to the previous claim, further including a water break grid (36) disposed in front of each additional aperture (35).

6. A hardfacing device (37, 37') for implementing a method for hardfacing a metal piece (8) of a turbine engine, the hardfacing device (37, 37') including:
- a spray nozzle (1);
- a protective cover (20) according to one of claims 1 to 5, part of the spray nozzle (1) being inserted in the opening (26) of the protective cover (20).

7. The hardfacing device (37, 37') according to the previous claim, further including sealing means (38) disposed between the spray nozzle (1) and the protective cover (20).

8. The hardfacing device (37, 37') according to the previous claim, wherein the sealing means (38) include:
- a first ferrule (39) attached to the spray nozzle;
- an intermediate piece (40) attached to the protective cover;
- an o-ring (41) interconnecting the first ferrule (39) and the intermediate piece (40).

9. The hardfacing device (37, 37') according to the previous claim, wherein the intermediate piece (40) is perforated by at least one port (42) arranged so as to enable a rotation around the reference axis (22) of the protective cover (20) relative to the spray nozzle (1).

10. A hardfacing system (44) including:
- a hardfacing device (37, 37') according to one of claims 6 to 9,
- laser emitting means (45) able to emit a laser through a central duct (2) of the spray nozzle (1),
the protective cover (20) being fastened to the laser emitting means by at least one fastening lug (46).
